(19) Europäisches Patentamt / European Patent Office / Office européen des brevets

(11) **EP 3 835 805 B1**

(12) **FASCICULE DE BREVET EUROPEEN**

(45) Date de publication et mention
de la délivrance du brevet:
**28.12.2022 Bulletin 2022/52**

(21) Numéro de dépôt: **20207696.4**

(22) Date de dépôt: **16.11.2020**

(51) Classification Internationale des Brevets (IPC):
**G01S 5/00** *(2006.01)*     **G06Q 10/08** *(2012.01)*
**G01S 19/34** *(2010.01)*

(52) Classification Coopérative des Brevets (CPC):
**G06Q 10/0833; G01S 5/0027; G01S 19/34**

(54) **PROCÉDÉ DE LOCALISATION D'UNE BALISE DE GÉOLOCALISATION**

VERFAHREN ZUR LOKALISIERUNG EINES GEOLOCATION-BEACON

METHOD FOR LOCATING A GEOLOCATION BEACON

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.12.2019 FR 1914018**

(43) Date de publication de la demande:
**16.06.2021 Bulletin 2021/24**

(73) Titulaire: **Orange
92130 Issy-les-Moulineaux (FR)**

(72) Inventeurs:
 • **CAZOULAT, Renaud**
  **92326 Châtillon (FR)**
 • **CUSSAC, Pierre**
  **92326 Châtillon (FR)**
 • **MEZA BALANTA, Claudia**
  **92326 Châtillon (CO)**

(56) Documents cités:
**WO-A1-2011/033504     WO-A1-2018/109284
CN-A- 108 900 976     KR-A- 20090 039 263
US-A1- 2015 355 308     US-A1- 2016 117 904
US-A1- 2019 236 323**

• JIAN YE ET AL: "A comprehensive resource management framework for next generation wireless networks", IEEE TRANSACTIONS ON MOBILE COMPUTING, IEEE SERVICE CENTER, LOS ALAMITOS, CA, US, vol. 1, no. 4, 1 octobre 2002 (2002-10-01) , pages 249-264, XP011095550, ISSN: 1536-1233, DOI: 10.1109/TMC.2002.1175539

• JOHNSON G W ET AL: "Results of ADS communications testing", OCEANS '96. MTS/IEEE. PROSPECTS FOR THE 21ST CENTURY. CONFERENCE PROCEEDINGS FORT LAUDERDALE, FL, USA 23-26 SEPT. 1996, NEW YORK, NY, USA,IEEE, US, vol. 1, 23 September 1996 (1996-09-23), pages 95-104, XP010203804, DOI: 10.1109/OCEANS.1996.572554 ISBN: 978-0-7803-3519-6

**Description**

Domaine technique

L'invention se rapporte au domaine des télécommunications.

L'invention se rapporte plus particulièrement à un procédé de gestion de la transmission de la localisation d'une balise de géolocalisation aussi appelée balise de traçabilité.

Etat de la technique

Le marché de l'Internet des balises, aussi connu sous le nom anglo-saxon « Internet of Things », connait une véritable explosion, tant auprès des particuliers que des entreprises. Les objets connectés sont pour la plupart équipés d'une batterie (rechargeable) ou d'une pile. L'autonomie des balises est donc un réel frein à l'expansion de ces balises.

En particulier, les balises de géolocalisation sont beaucoup utilisées pour localiser et suivre des objets auxquels elles sont couplées lors de leurs déplacements. Ces balises sont fixées sur l'objet ou placées dans l'objet et émettent des positions géographiques périodiquement permettant de localiser et de suivre l'objet lors de son déplacement.

Quand un colis est expédié et que l'on souhaite surveiller son trajet, une balise de géolocalisation est placée à l'intérieur du colis. Durant le transport, les différentes balises transmettent, avec une fréquence donnée leurs informations de localisation respectives, par exemple leurs positions GPS, à destination d'un serveur de traçabilité.

Le document WO2011/033504 A1 décrit un système avec au moins deux zones d'intérêt dans lesquelles une unité mobile peut être localisée. Un rapport de localisation sera stocké dans la base de données en fonction de la zone d'intérêt dans laquelle se trouve l'unité mobile. Par exemple, les critères de dilution peuvent être différents pour chaque zone d'intérêt. Un exemple de ce mode de réalisation est un système de localisation avec deux zones d'intérêt, une à l'intérieur et une à l'extérieur. L'utilisateur souhaite avoir la possibilité d'interroger l'historique de localisation, sur la base de la zone de localisation de l'unité mobile (par exemple, une étiquette). Si la balise se trouve dans une zone extérieure, elle signale plus fréquemment (plus de rapports de localisation dans la base de données) et si la balise se trouve dans une zone intérieure, elle signale moins fréquemment.

Le document par JIAN YE ET AL: "A comprehensive resource management framework for next génération wireless networks", IEEE TRANSACTIONS ON MOBILE COMPUTING, IEEE SERVICE CENTER, vol. 1, no. 4, 2002-10-01, enseigne un système où la localisation est périodiquement mise à jour. Dans ce document, les informations de position des stations mobiles et la réservation de bande passante doivent être recalculées périodiquement. En mettant à jour périodiquement les informations de réservation de bande passante, la ressource de bande passante est utilisée de manière plus efficace. Cependant, le processus de mise à jour des informations lui-même consomme de la bande passante et des ressources de calcul. Plus l'intervalle de mise à jour est long, moins les ressources sont consommées par le processus de mise à jour, au prix d'informations de position moins précises. D'autre part, plus l'intervalle de mise à jour est court, plus de ressources sont consommées par le processus de mise à jour, mais la qualité de service pourrait être garantie et l'utilisation de la bande passante pourrait être plus efficace. Ainsi, un intervalle optimal de mise à jour des informations qui équilibre ce compromis doit être obtenu.

La transmission de localisation depuis une balise a un coût en argent ; en effet, la localisation est transmise via un réseau d'un opérateur qui facture l'envoi des localisations. Afin de maitriser les coûts et surtout simplifier les processus de facturation, les balises vont pour la plupart être associées à une quantité de données maximales (généralement exprimée en Giga-octets ou Go), ici un nombre de messages de localisation maximum, à utiliser sur le réseau (appelé godet de données), pour un prix donné. Cette quantité maximale est allouée à la balise sous forme de forfait de données pour une période temporelle donnée, par exemple deux ans. La balise possède ainsi un budget de données qu'elle ne pourra pas dépasser pendant cette durée.

Le problème est que le coût associé à la transmission de données diffère d'une d'un réseau à un autre. Ce problème se pose fréquemment lorsque la balise passe d'un premier réseau d'une première zone géographique, dite zone de référence, à un deuxième réseau par exemple d'une deuxième zone géographique. Selon la zone géographique dans laquelle va se situer la balise, du fait de la variation des coûts, l'envoi d'un message coutera plus ou moins cher. Par exemple, si le coût par octets dans une zone géographique donnée est supérieur au coût par octets de la zone de référence, la transmission d'un message coutera plus cher. Cette situation s'avère problématique dans la mesure où elle peut conduire la balise, en situation de mobilité, à consommer prématurément l'intégralité du budget alloué à la balise. Lorsque ce cas se présente,

- soit l'opérateur bloque la transmission car le forfait est un forfait bloqué ; dans ce cas la balise n'émet plus de messages de localisation ; Cette solution n'est pas souhaitable en termes de qualité de service ;

- soit l'opérateur autorise la transmission et facture les messages transmis hors forfait ; cette solution n'est pas souhaitable car peut devenir très onéreuse d'autant plus que la durée prise en compte peut être longue par exemple une année voire plus.

L'invention vient améliorer la situation.

L'invention

A cet effet, selon un aspect fonctionnel, l'invention a trait à un procédé de gestion de la transmission des localisations géographiques d'une balise de géolocalisation au cours de son déplacement tel que défini dans la revendication 1.

Contrairement à l'état de la technique où chaque balise de géolocalisation transmet sa localisation avec une fréquence constante, l'invention propose, de rendre variable la fréquence de transmission en fonction du réseau avec lequel la balise communique et d'une valeur associée à ce réseau. Grâce à l'invention, la balise diminue, augmente, ou maintient le nombre de messages de localisation ; En conséquence, le coût étant lié à la quantité de données transmises, l'invention garantit, sur une durée donnée, une consommation linéaire, et non une consommation par paliers qui aurait pour effet une consommation prématurée du budget alloué à la balise. L'invention permet de lisser la facturation liée à l'utilisation d'un réseau quel que soit le coût de transmission de données sur le réseau considéré.

Selon un premier mode de mise en œuvre particulier de l'invention, la fréquence modifiée est maintenue tant que la balise est localisée dans le deuxième réseau. La balise conserve donc la fréquence modifiée tant qu'elle est localisée dans la deuxième zone et recalcule une nouvelle fréquence à chaque passage dans un nouveau réseau.

Selon encore un premier mode de mise en œuvre particulier de l'invention, qui pourra être mis en œuvre alternativement ou cumulativement avec les précédents, la balise mémorise des correspondances entre des codes et des valeurs respectives, et en ce que l'étape d'obtention d'une deuxième valeur consiste à recevoir un code relatif au réseau utilisé depuis un dispositif d'accès au réseau avec lequel la balise communique, et à récupérer la valeur qui correspond au code reçu. Le dispositif d'accès est par exemple une station de base du réseau mobile. Dans ce mode, la balise utilise un code reçu pour identifier le réseau courant utilisé et déterminer la valeur associée, par exemple le coût de transmission de données sur ce réseau.

Selon encore un deuxième mode de mise en œuvre particulier de l'invention, qui pourra être mis en œuvre alternativement ou cumulativement avec les précédents, si la deuxième valeur est supérieure, la fréquence de référence est diminuée. Dans ce mode, le nombre de transmissions de localisation est diminué pour compenser le coût plus élevé lié à la transmission de données sur le deuxième réseau.

Selon encore un troisième mode de mise en œuvre particulier de l'invention, qui pourra être mis en œuvre alternativement ou cumulativement avec les précédents, si la deuxième valeur est inférieure, la fréquence de référence est augmentée. Cette diminution va permettre d'émettre plus souvent la localisation sans consommer prématurément le budget alloué.

Selon encore un quatrième mode de mise en œuvre particulier de l'invention, qui pourra être mis en œuvre alternativement ou cumulativement avec les précédents, si la deuxième valeur est inférieure, la fréquence de référence est maintenue. Ce mode permet à la balise de ne pas consommer plus de batterie et maintenir ainsi son autonomie.

Selon un aspect matériel, l'invention se rapporte à une entité de gestion tel que défini dans la revendication 7.

Selon un autre aspect matériel, l'invention se rapporte à une balise de géolocalisation comprenant une entité de gestion telle que définie dans la revendication 8.

Selon un autre aspect matériel, l'invention a trait à un programme d'ordinateur apte à être mis en œuvre sur une entité de gestion, tel que défini dans la revendication 9.

Enfin, l'invention a trait à un support de données sur lequel a été mémorisée au moins une série d'instructions de code de programme pour l'exécution du procédé défini ci-dessus.

Le support de données peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique tel qu'un un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Enfin, signalons ici que, dans le présent texte, le terme « module » ou « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention sera mieux comprise à la lecture de la description qui suit, donnée à titre d'exemple et faite en référence aux dessins annexés sur lesquels :

[Fig. 1] La figure 1 représente un système informatique sur lequel est illustré un exemple de réalisation de l'invention.

[Fig. 2] la figure 2 est une vue schématique de l'architecture d'une balise de géolocalisation.

[Fig. 3] la figure 3 illustre l'évolution de la consommation de forfaits lorsque la balise reste dans une zone de référence.

[Fig. 4] la figure 4 illustre l'évolution de la consommation de forfaits lorsque la balise passe d'une première zone géographique dans une deuxième zone géographique.

[Fig. 5] la figure 5 illustre une table incluant des valeurs associées à des zones géographiques respectives.

[Fig. 6] la figure 6 présente sous forme d'organigramme les différentes étapes du procédé de l'invention selon un mode de réalisation de l'invention.

[Fig. 7] la figure 7 illustre l'évolution de la consommation du forfait dans un contexte similaire à celui de la figure 4 et dans lequel l'invention est mise en œuvre.

[Fig. 8] la figure 8 illustre plus en détail la phase d'adaptation de la fréquence de transmission des localisations au cours de laquelle des coefficients de pondération sont appliqués.

Description détaillée d'un (ou d') exemple(s) de réalisation illustrant l'invention

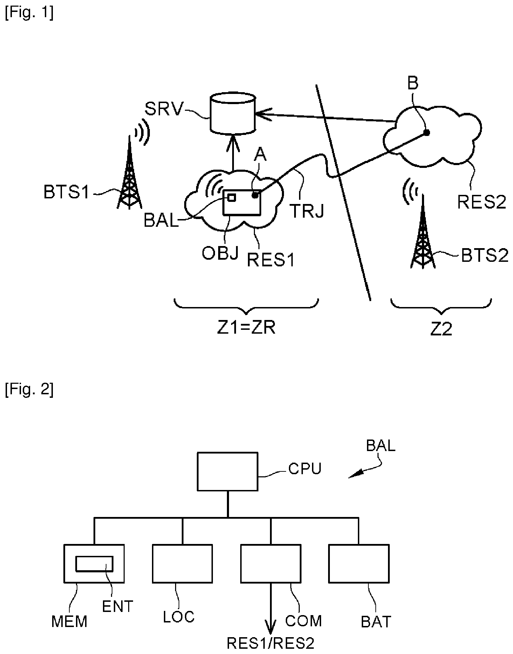

La figure 1 représente un système SYS comprenant une balise de géolocalisation de type balise de traçabilité BAL. Dans notre exemple, cette balise est associée à un objet à transporter ; elle peut être par exemple accolée à l'objet ou située à l'intérieur de l'objet. Un objet est par exemple un colis, une valise, un container, etc.

Une balise BAL permet d'obtenir la position de l'objet auquel elle est associée. La balise émet avec une fréquence donnée une donnée représentative d'une localisation au cours de son déplacement tout au long d'un trajet TRJ. Précisons que le terme fréquence est une grandeur liée à un phénomène périodique, qui mesure le nombre de fois où ce phénomène se reproduit dans un intervalle de temps donné ; par exemple un message transmis 10 fois dans une journée est transmis avec une fréquence de 10 messages par jour à intervalle régulier.

Dans notre exemple, la balise BAL est apte à communiquer avec un serveur qui reçoit les localisations. La localisation de la balise permet de localiser l'objet auquel elle est associée.

En référence à la figure 2, une balise BAL a une architecture matérielle d'un ordinateur conventionnel. Elle comporte notamment un processeur CPU, une mémoire vive de type RAM (non représentée sur la figure) et une mémoire morte MEM telle qu'une mémoire de type Flash, ROM, etc.

La balise BAL est apte à émettre des données via un réseau géré par un opérateur. Dans notre exemple, l'opérateur est un opérateur de télécommunications qui facture l'utilisation de son réseau pour transmettre et/ou recevoir des données.

La balise BAL comprend un module communication COM pour communiquer avec un réseau RES1/RES2. Ce module de communication COM est apte à transmettre des données à destination d'un serveur de traçabilité distant SRV via un réseau exemple un réseau mobile de type 5G illustré au moyen d'une antenne BTS1/BT2 sur la figure 1. La balise BAL est en outre, dans notre exemple, équipée d'une batterie BAT pour être alimentée électriquement. Rappelons ici que l'invention ne se limite aux balises alimentées par une batterie mais s'étend à toutes balises quel que soit la source d'alimentation électrique utilisé.

Une balise comprend aussi un module de localisation LOC dont la fonction est l'obtention d'une donnée de localisation représentative de la localisation de la balise, sous-entendu de l'objet OBJ auquel elle est associée. Dans notre exemple, le module de localisation LOC est un module de géolocalisation (par exemple, de type GPS, pour Global Positioning System). La donnée de localisation peut aussi être une adresse postale, etc.

Dans notre exemple, la balise BAL émet périodiquement sa position via le réseau auquel elle est reliée. Cette balise BAL va se déplacer d'un point A situé dans une première zone géographique Z1, dite de référence, vers un point B d'une deuxième zone géographique Z2.

Les zones comprennent des réseaux de télécommunication respectifs RES1/RES2 gérés par exemple par des opérateurs de télécommunication offrant des forfaits de données pour l'utilisation de leurs réseaux respectifs sur une période donnée. La période donnée est généralement de quelques mois.

Le forfait souscrit auprès du premier opérateur, dit opérateur de référence, comprend par exemple un volume de données souvent appelé godet de données par l'homme du métier pour un prix donné. Au volume de données correspond un nombre de messages de localisation maximum à transmettre pendant la durée donnée ; il résulte du forfait un coût de transmission d'un unique message appelé coût unitaire.

Dans notre exemple, un forfait prépayé pour une quantité de données est alloué à la balise. Dans notre exemple, le forfait visé est lié à une zone géographique donnée dite de zone référence ZR. Cette zone de référence est par exemple la France.

Dans cette zone de référence ZR, les localisations successives de la balise sont transmises avec une fréquence donnée.

Comme indiqué ci-dessus, des accords d'itinérance (ou roaming) sont conclus entre zones géographiques Z1 et Z2. Le coût unitaire lié à la transmission d'une localisation, sous-entendu du message incluant la localisation, va donc varier en fonction du réseau utilisé dans la zone géographique considérée. Lorsque la balise entre dans une zone géographique incluant un réseau associé à un coût unitaire supérieur au coût unitaire du réseau de référence, la transmission d'un message coûte plus cher. Une première conséquence est que la balise est facturée du surplus ; une deuxième conséquence est que la balise consomme plus vite que prévu le budget qui lui a été alloué. Le budget alloué va donc être consommé prématurément.

Deux cas vont être présentés ci-dessous pour illustrer les conséquences d'un surcoût.

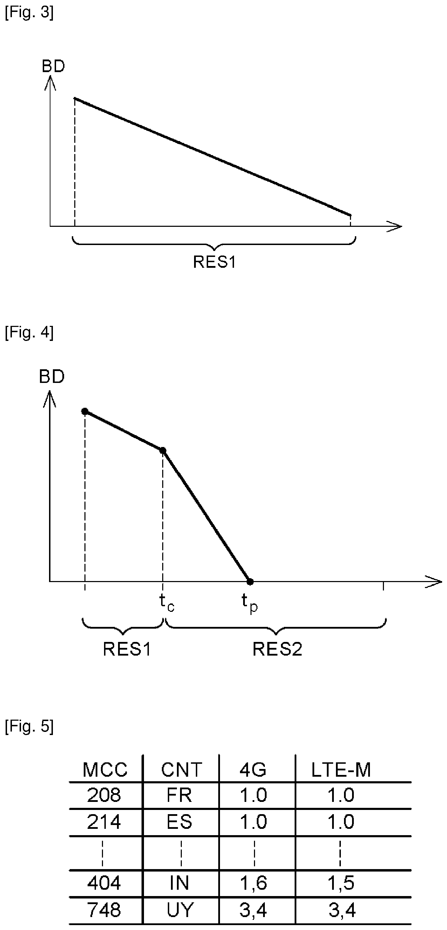

Un premier cas illustré sur la figure 3 vise le cas dans lequel la balise se déplace dans la même zone de référence ZR et communique va un réseau de référence RES1. Un repère est représenté sur cette figure avec comme abscisse la durée et comme ordonnée le forfait. On constate que le forfait décroit linéairement depuis le premier instant d'utilisation du forfait jusqu'à un deuxième instant représentatif de la période prévue de fin d'utilisation de la balise. Cette période a par exemple une durée prévue d'un mois ou d'une année.

Un deuxième cas est illustré sur la figure 4, dans lequel la balise BAL passe du réseau de référence RES1 vers un deuxième réseau RES2 situé dans une deuxième zone géographique Z2. Il résulte des différences entre coûts unitaires des différents réseaux, comme expliqué ci-avant, une décroissance plus rapide du budget alloué. En effet, dès que la balise communique via le deuxième réseau RES2, le coût unitaire étant supérieur au coût unitaire de la zone de référence et pour un même nombre de messages transmis (même fréquence), le budget diminue plus rapidement. Cette consommation non pas linéaire mais par palier va conduire :

- à une consommation prématurée du forfait à l'instant tp si le coût unitaire de transmission d'une localisation dans le deuxième réseau est supérieur au coût unitaire dans la zone de référence ZR ; ce cas est illustré sur la figure 4.

- ou au contraire à un forfait non utilisé complètement si le coût unitaire de transmission d'une localisation est moins important dans la deuxième zone que dans la zone de référence ZR.

Pour assurer une utilisation optimale du budget BD alloué dans la zone de référence, l'invention vient adapter le comportement de la balise. Plus particulièrement, une entité ENT présente dans la balise adapte la fréquence d'émission de la localisation en fonction du réseau utilisé, plus particulièrement d'une valeur représentative du coût unitaire lié à la transmission d'une localisation sur le réseau utilisé. On fait ici l'hypothèse qu'une valeur CU1 est liée au premier réseau et une valeur CU2 est liée au deuxième réseau. Les valeurs CU1 et CU2 sont représentatives du coût unitaire lié à la transmission d'une localisation sur le réseau utilisé.

L'invention comprend les étapes suivantes :

- une étape préalable de définition d'un premier réseau de communication de référence ZR associé à une première valeur CU1 et à une fréquence de réference utilisée pour la transmission des localisations sur le premier réseau,

- une étape de localisation de la balise dans un deuxième réseau au cours de son déplacement ;

- une étape d'obtention d'une deuxième valeur CU2 associée au deuxième réseau ;

- une étape de comparaison de la première CU1 et de la deuxième valeur CU2, et lorsque les valeurs diffèrent, le procédé comprend une étape de modification de la fréquence de référence pour la transmission des localisations sur le deuxième réseau.

Ensuite, l'entité ENT compare les valeurs CU1 et CU2 du réseau de référence RES1 et du réseau RES2 respectivement.

La nouvelle valeur de la fréquence de transmission de la localisation sera choisie de telle façon à assurer une transmission de la localisation pendant une durée donnée, par exemple la durée prévue d'utilisation de la balise (deux ans par exemple), et éviter une consommation prématurée du forfait dans son intégralité.

Si au contraire, les valeurs sont telles que le forfait ne sera pas consommé entièrement à l'expiration du forfait :

- soit la fréquence est maintenue,

- soit la fréquence est augmentée de manière à consommer la totalité du forfait et augmenter la qualité du service de localisation en émettant plus souvent la localisation.

Lorsqu'un forfait est alloué pour une durée déterminée T à un balise, une entité de gestion ENT présente dans la balise va réaliser un calcul qui consiste à calculer en fonction de la valeur CU associée au réseau de la zone considérée le nombre N de localisations à transmettre.

Un nombre de transmission de données de localisations possible par jour va être calculé connaissant le volume de données (VD) lié à la transmission d'une localisation, sous-entendu du message incluant la localisation, dans la zone géographique concernée.

Le nombre de transmissions par jour est donc de

$$BD/(T \times VD)$$

« / » désigne le signe division,

« x » désigne le signe multiplication.

Par exemple, une balise GPS fonctionnant avec un réseau de type LTE-M (acronyme de Long Term Evolution-CategoryMachine), connu de l'homme du métier, va transmettre sa position à intervalle régulier. Considérons que la balise dispose d'un volume de données (appelé aussi godet de données par l'homme du métier) fixe en terme de volume de données, par exemple 20 MO (Mégaoctets), pour une durée T de deux ans. Considérons aussi que la transmission d'une localisation correspond à un volume de 2KO par transmission. Il résulte des valeurs données ci-dessus un nombre N de transmissions par jour de localisation donné par la formule :

$$N = 20000/(365 \times 2 \times 2) = 13$$

Soit, une journée comprenant 24 heures, une transmission toutes les deux heures sera satisfaisante pour transmettre la localisation.

Comme vu précédemment, une entrée dans une zone géographique autre que la zone de référence peut avoir un impact en termes de coût financier.

Pour pallier à ce problème, l'invention propose de faire varier la fréquence de transmission de la localisation de la balise BAL1 en fonction d'une valeur liée au réseau utilisé. Pour cela, la balise, ou plus précisément l'entité ENT présente dans la balise, dispose de données pertinentes relatives à différentes zones géographiques, sous-entendu à des différents réseaux de télécommunication, susceptibles d'être utilisés par la balise.

Les données pertinentes incluent tout ou partie des données représentées sur la figure 5.

La table indique pour différentes zones géographiques (FR, ES, ..., IN, UY), l'identifiant de zone MCC correspondant (208,214,...748), pour chaque réseau de la zone par exemple les réseaux 4G et LTE-M, un coefficient pondérateur représentatif d'un coût lié à la transmission de données sur ce réseau par rapport au réseau de référence RES1. Par exemple dans la table, pour le pays FR, qui est la zone géographique de référence ZR, les coefficients pondérateurs sont 1.0 et 1.0. Pour la zone ES, les coefficients sont les mêmes ce qui signifie que le coût unitaire d'un message est le même qu'en France. Par contre, pour la zone UY, les coefficients pondérateurs sont 3.4 et 3.4 respectivement. Les coefficients de pondérateur sont dépendants d'accords de roaming entre la zone de référence RES1 et les autres zones concernées. On expliquera ci-dessous l'intérêt d'utiliser de tels coefficients pondérateurs pour calculer le nombre de messages de localisation par jour dans chaque zone traversée par la balise BAL.

Les coefficients pondérateurs définis ci-dessus visent à modifier le nombre de localisations transmises sur une période donnée de manière à garantir la transmission de la localisation pendant une durée donnée et sans coût supplémentaire. Selon la zone géographique, la fréquence va donc être diminuée ou augmentée de manière à ne pas dépasser le budget alloué. Par exemple, dans une zone géographique où les accords de roaming sont avantageux, la balise va pouvoir augmenter la fréquence d'envoi de sa localisation. A l'inverse, dans une zone géographique où les accords de roaming sont désavantageux, la balise va diminuer la fréquence d'envoi de sa localisation. Les modifications de fréquence vont se baser sur les coefficients de pondération introduits ci-dessus.

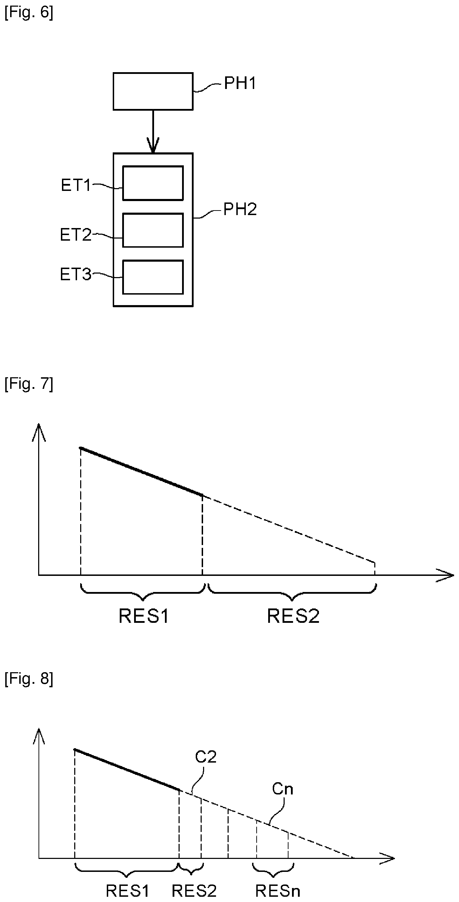

La figure 6 illustre les étapes d'un mode de réalisation du procédé de l'invention.

A l'initialisation, les instructions de code du programme d'ordinateur sont par exemple chargées dans une mémoire avant d'être exécutées par le processeur CPU. Le processeur CPU de l'unité de traitement met notamment en œuvre les phases et étapes suivantes : Lors d'une première phase PH1, la balise se déplace dans la zone de référence RES1, par exemple la zone FR en référence à la figure 5.

Lors d'une deuxième phase PH2, la balise se déplace et au cours de son trajet TRJ, la balise entre dans une autre zone Z2, par exemple la zone IN dont les coefficients de pondération sont 1.6 et 1.5 pour les réseaux 4G et LTE-M, respectivement.

Les étapes suivantes s'exécutent durant cette deuxième phase : Lors d'une première étape ET1, la balise se connecte à une antenne radio d'un réseau de la zone IN, par exemple le réseau LTE-M et récupère le MCC (Mobile Country Code) de ce réseau depuis la station de base BTS.

L'entité ENT vérifie ensuite en mémoire, lors d'une deuxième étape ET2, les coefficients de pondération associés à cette zone IN pour le réseau LTE-M, à savoir 1.5 et utilise la formule suivant pour définir le nombre de transmission de localisation par jour :

$$BD/(T \times VD \times CP)$$

CP désigne le coefficient de pondération à appliquer.

Dans notre exemple, en considérant que les mêmes valeurs que précédemment, à savoir un volume de données de 20 MO (MégaOctets), une durée de deux ans et un volume de 2KO par transmission, et un coefficient pondérateur de 1.5, le calcul donne :

$$20000/(365 \times 2 \times 2 \times 1.5) = 9.$$

Ce sont donc maintenant 9 transmissions par jour au lieu de 13 qui seront effectuées. La nouvelle fréquence est mise en œuvre lors d'une troisième étape ET3. Cette diminution de la fréquence va ainsi compenser le surcoût lié à la transmission de données sur ce deuxième réseau en raison d'accords de roaming moins avantageux.

Ensuite, on suppose que la balise revient dans la zone FR. La fréquence st de nouveau modifiée et reprend la valeur liée à la zone de référence à savoir 13 transmissions de messages.

La figure 7 illustre l'évolution de la consommation du budget alloué en fonction du temps. Comme le montre cette figure 7, grâce à l'invention, l'évolution est linéaire, tout comme sur la figure 3, malgré la variation des coûts unitaires. La partie en pointillée correspond à la deuxième phase PH2.

La figure 8 donne un exemple d'un trajet effectué en traversant plusieurs réseaux RES1-RESn incluent dans diverses zones géographiques. Dans cette configuration, pendant la deuxième phase plusieurs calculs sont réalisés avec les coefficients de pondération concernés C1-Cn. Le budget va décroître linéairement bien que le coût soit variable. Tout au long de ses déplacements, l'objet va donc adapter constamment son fonctionnement en variant la périodicité de transmission de la localisation pour respecter une linéarité de consommation de budget comme indiqué ci-dessus.

Selon une variante possible du procédé, la balise reçoit les coefficients de pondération uniquement des zones faisant partie du trajet TRJ. Ces informations sont mises à jour pour au fil du temps.

## Revendications

1. Procédé de gestion de la transmission des localisations géographiques d'une balise de géolocalisation au cours de son déplacement, le procédé étant exécuté par ladite balise et étant **caractérisé en ce qu'**il comprend les étapes suivantes:

   - une étape préalable de définition d'un premier réseau de communication de référence (ZR) associé à une première valeur représentative d'un coût lié à la transmission d'une localisation sur le premier réseau (RES1) et à une fréquence de référence utilisée pour la transmission des localisations sur le premier réseau ;
   - une étape de localisation de la balise dans un deuxième réseau (RES2) au cours de son déplacement ;
   - une étape d'obtention d'une deuxième valeur représentative d'un coût lié à la transmission d'une localisation sur le deuxième réseau (RES2) ;
   - une étape de comparaison de la première et de la deuxième valeur, et lorsque les valeurs diffèrent, le procédé comprend une étape de modification de la fréquence de référence pour la transmission des localisations sur le deuxième réseau, le calcul de la nouvelle fréquence étant basée sur ladite deuxième valeur.

2. Procédé selon la revendication 1, **caractérisé en ce que** la fréquence modifiée est maintenue tant que la balise est localisée dans le deuxième réseau.

3. Procédé selon la revendication 1, **caractérisé en ce que** la balise mémorise des correspondances entre des codes relatifs aux réseaux utilisés et des valeurs respectives, et **en ce que** l'étape d'obtention d'une deuxième valeur consiste à recevoir un code relatif au réseau utilisé depuis un dispositif d'accès au réseau avec lequel la balise communique et à récupérer la valeur qui correspond au code reçu.

4. Procédé selon l'une des revendications 1 ou 2, **caractérisé en ce que**, si la deuxième valeur est supérieure à la première valeur, la fréquence de référence est diminuée.

5. Procédé selon l'une des revendications 1 ou 2, **caractérisé en ce que**, si la deuxième valeur est inférieure à la première valeur, la fréquence de référence est augmentée.

6. Procédé selon l'une des revendications 1 ou 2, **caractérisé en ce que**, si la deuxième valeur est inférieure à la première valeur, la fréquence de référence est maintenue.

7. Entité de gestion (ENT) de la transmission des localisations géographiques d'une balise de géolocalisation au cours de son déplacement, l'entité de gestion étant une entité pour la balise de géolocalisation et **caractérisée en ce qu'**elle comprend :

   - un module de définition d'un premier réseau de communication de référence (ZR) associé à une première valeur représentative d'un coût lié à la transmission d'une localisation sur le premier réseau (RES1) et d'une fréquence de référence utilisée pour la transmission des localisations sur le premier réseau ;
   - un module de localisation de la balise dans un deuxième réseau au cours de son déplacement ;
   - un module d'obtention d'une deuxième valeur associée à la deuxième zone représentative d'un coût lié à la transmission d'une localisation sur le deuxième réseau (RES2);
   - un module de comparaison de la première et de la deuxième valeur,
   - un module de modification de la fréquence de référence pour la transmission des localisations sur le deuxième réseau par la balise sur une période de temps donnée lorsque les valeurs diffèrent, le calcul de la nouvelle fréquence étant basée sur ladite deuxième valeur.

8. Balise de géolocalisation comprenant une entité de gestion telle que définie dans la revendication 7.

9. Programme d'ordinateur apte à être mis en œuvre sur une balise de géolocalisation, le programme comprenant des instructions de code qui, lorsqu'il est exécuté par un processeur de la balise de géolocalisation, permet à la balise de réaliser les étapes du procédé définies dans l'une des revendications 1 à 6.

10. Support de données sur lequel a été mémorisée au moins une série d'instructions de code de programme pour l'exécution d'un procédé défini dans l'une des revendications 1 à 6.

**Patentansprüche**

1. Verfahren zur Verwaltung der Übertragung der geographischen Lokalisierungen einer Geolokalisierungsbake während ihrer Bewegung, wobei das Verfahren von der Bake ausgeführt wird und **dadurch gekennzeichnet ist, dass** es die folgenden Schritte enthält:

   - einen vorhergehenden Schritt der Definition eines ersten Bezugskommunikationsnetzwerks (ZR), das einem ersten Wert zugeordnet ist, der für mit der Übertragung einer Lokalisierung auf dem ersten Netzwerk (RES1) und mit einer für die Übertragung der Lokalisierungen auf dem ersten Netzwerk verwendeten Bezugsfrequenz verbundene Kosten repräsentativ ist;
   - einen Schritt der Lokalisierung der Bake auf einem zweiten Netzwerk (RES2) während ihrer Bewegung;
   - einen Schritt des Erhalts eines zweiten Werts, der für mit der Übertragung einer Lokalisierung auf dem zweiten Netzwerk (RES2) verbundene Kosten repräsentativ ist;
   - einen Schritt des Vergleichs des ersten und des zweiten Werts, und wenn die Werte sich unterscheiden, enthält das Verfahren einen Schritt der Änderung der Bezugsfrequenz für die Übertragung der Lokalisierungen auf dem zweiten Netzwerk, wobei die Berechnung der neuen Frequenz auf dem zweiten Wert basiert.

2. Verfahren nach Anspruch 1, **dadurch gekennzeichnet, dass** die geänderte Frequenz beibehalten wird, so lange die Bake sich im zweiten Netzwerk befindet.

3. Verfahren nach Anspruch 1, **dadurch gekennzeichnet, dass** die Bake Entsprechungen zwischen Codes bezüglich der verwendeten Netzwerke und jeweiligen Werten speichert, und dass der Schritt des Erhalts eines zweiten Werts darin besteht, einen Code bezüglich des verwendeten Netzwerks von einer Zugangsvorrichtung zu dem Netzwerk zu empfangen, mit dem die Bake kommuniziert, und darin besteht, den Wert wiederzugewinnen, der dem empfangenen Code entspricht.

4. Verfahren nach einem der Ansprüche 1 oder 2, **dadurch gekennzeichnet, dass**, wenn der zweite Wert höher ist als der erste Wert, die Bezugsfrequenz verringert wird.

5. Verfahren nach einem der Ansprüche 1 oder 2, **dadurch gekennzeichnet, dass**, wenn der zweite Wert niedriger ist als der erste Wert, die Bezugsfrequenz erhöht wird.

6. Verfahren nach einem der Ansprüche 1 oder 2, **dadurch gekennzeichnet, dass**, wenn der zweite Wert niedriger ist als der erste Wert, die Bezugsfrequenz beibehalten wird.

7. Verwaltungsentität (ENT) der Übertragung der geographischen Lokalisierungen einer Geolokalisierungsbake während ihrer Bewegung, wobei die Verwaltungsentität eine Entität für die Geolokalisierungsbake und **dadurch gekennzeichnet ist, dass** sie enthält:

   - ein Definitionsmodul eines ersten Bezugskommunikationsnetzwerks (ZR), das einem ersten Wert zugeordnet ist, der für mit der Übertragung einer Lokalisierung auf dem ersten Netzwerk (RES1) und einer Bezugsfrequenz verbundene Kosten repräsentativ ist, die für die Übertragung der Lokalisierungen auf dem ersten Netzwerk verwendet wird;
   - ein Lokalisierungsmodul der Bake in einem zweiten Netzwerk während ihrer Bewegung;
   - ein Erhaltsmodul eines der zweiten Zone zugeordneten zweiten Werts, der für mit der Übertragung einer Lokalisierung auf dem zweiten Netzwerk (RES2) verbundene Kosten repräsentativ ist;
   - ein Vergleichsmodul des ersten Werts und des zweiten Werts,
   - ein Änderungsmodul der Bezugsfrequenz für die Übertragung der Lokalisierungen auf dem zweiten Netzwerk durch die Bake über einen gegebenen Zeitraum, wenn die Werte unterschiedlich sind, wobei die Berechnung der neuen Frequenz auf dem zweiten Wert basiert.

8. Geolokalisierungsbake, die eine Verwaltungsentität wie in Anspruch 7 definiert enthält.

9. Computerprogramm, das auf einer Geolokalisierungsbake durchgeführt werden kann, wobei das Programm Codeanweisungen enthält, die, wenn es von einem Prozessor der Geolokalisierungsbake ausgeführt wird, der Bake ermöglichen, die in einem der Ansprüche 1 bis 6 definierten Schritte des Verfahrens durchzuführen.

10. Datenträger, auf dem mindestens eine Reihe von Programmcodeanweisungen für die Ausführung eines in einem der Ansprüche 1 bis 6 definierten Verfahrens gespeichert ist.

## Claims

1. Method for managing the transmission of geographical locations from a geolocation beacon during the movement thereof, the method being carried out by said beacon and being **characterized in that** it comprises the following steps:

   - a prior step of defining a first reference communication network (ZR) associated with a first value representative of a cost linked to the transmission of a location over the first network (RES1) and with a reference frequency used for the transmission of the locations over the first network;
   - a step of locating the beacon in a second network (RES2) during the movement thereof;
   - a step of obtaining a second value representative of a cost linked to the transmission of a location over the second network (RES2);
   - a step of comparing the first and the second value, and when the values differ, the method comprises a step of modifying the reference frequency for the transmission of the locations over the second network, the calculation of the new frequency being based on said second value.

2. Method according to Claim 1, **characterized in that** the modified frequency is maintained for as long as the beacon is located in the second network.

3. Method according to Claim 1, **characterized in that** the beacon stores correspondences between codes related to the networks used and respective values, and **in that** the step of obtaining a second value consists in receiving a code relating to the network used from a network access device with which the beacon communicates and in retrieving the value that corresponds to the received code.

4. Method according to either of Claims 1 and 2, **characterized in that** if the second value is higher than the first value, the reference frequency is decreased.

5. Method according to either of Claims 1 and 2, **characterized in that** if the second value is lower than the first value, the reference frequency is increased.

6. Method according to either of Claims 1 and 2, **characterized in that** if the second value is lower than the first value, the reference frequency is maintained.

7. Entity for managing (ENT) the transmission of geographical locations from a geolocation beacon during the movement thereof, the managing entity being an entity for the geolocation beacon and **characterized in that** it comprises:

   - a module for defining a first reference communication network (ZR) associated with a first value representative of a cost linked to the transmission of a location over the first network (RES1) and of a reference frequency used for the transmission of the locations over the first network;
   - a module for locating the beacon in a second network during the movement thereof;
   - a module for obtaining a second value associated with the second region that is representative of a cost linked to the transmission of a location over the second network (RES2);
   - a module for comparing the first and the second value;
   - a module for modifying the reference frequency for the transmission of the locations over the second network by the beacon over a given time period when the values differ, the calculation of the new frequency being based on said second value.

8. Geolocation beacon comprising a management entity such as defined in Claim 7.

9. Computer program able to be implemented on a geolocation beacon, the program comprising code instructions that, when it is executed by a processor of the geolocation beacon, allow the beacon to perform the steps of the method that are defined in one of Claims 1 to 6.

10. Data carrier on which at least one sequence of program code instructions for executing a method defined in one of Claims 1 to 6 has been stored.

[Fig. 1]

[Fig. 2]

[Fig. 3]

[Fig. 4]

[Fig. 5]

| MCC | CNT | 4G | LTE-M |
|-----|-----|-----|-------|
| 208 | FR | 1.0 | 1.0 |
| 214 | ES | 1.0 | 1.0 |
| ⋮ | ⋮ | ⋮ | ⋮ |
| 404 | IN | 1,6 | 1,5 |
| 748 | UY | 3,4 | 3,4 |

[Fig. 6]

[Fig. 7]

[Fig. 8]

## RÉFÉRENCES CITÉES DANS LA DESCRIPTION

**Documents brevets cités dans la description**

- WO 2011033504 A1

**Littérature non-brevet citée dans la description**

- A comprehensive resource management framework for next génération wireless networks. **JIAN YE et al.** IEEE TRANSACTIONS ON MOBILE COMPUTING. IEEE SERVICE CENTER, 01 Octobre 2002, vol. 1